# EUROPEAN PATENT SPECIFICATION

(11) **EP 4 534 969 B1**
(45) Date of publication and mention of the grant of the patent: **04.11.2026**
(21) Application number: 24201569.1
(22) Date of filing: 20.09.2024
(51) Int. Cl.: G01M 3/36, B65B 57/00, B65B 51/10, B65B 57/08

(54) **SEAL CHECKING APPARATUS AND PACKAGING AND INSPECTION SYSTEM**
SIEGELPRÜFVORRICHTUNG UND VERPACKUNGS- UND PRÜFSYSTEM
APPAREIL DE VÉRIFICATION DE JOINT D'ÉTANCHÉITÉ ET SYSTÈME D'EMBALLAGE ET D'INSPECTION

(30) Priority: 02.10.2023 JP 2023171474
(43) Date of publication of application: 09.04.2025
(73) Proprietor: Ishida Co., Ltd., Kyoto-shi Kyoto 606-8392 (JP)
(72) Inventor: Fukui, Chiaki, Shiga, 520-3026 (JP); Tanigawa, Akihiro, Shiga, 520-3026 (JP); Okamoto, Yuji, Shiga, 520-3026 (JP); Ono, Koji, Shiga, 520-3026 (JP); Yokota, Yuji, Shiga, 520-3026 (JP)
(74) Representative: Betten & Resch

(56) References cited:
- JP-A- 2003 149 074
- JP-B2- 4 249 889
- JP-B2- 4 249 952
- US-B1- 6 474 141

## Description

### BACKGROUND

### TECHNICAL FIELD

The present invention relates to a seal checking apparatus and a packaging and inspection system.

### RELATED ART

Conventionally, there have been apparatus that inspect top-sealed packages and detect defective packaging. For example, in the apparatus of Patent Document 1 (JP-A No. 2006-160264), pressing surfaces of air cylinders are applied to packages on a conveyor to thereby press upper surfaces of the packages. Defective packages are detected based on signals from sensors connected to the air cylinders. A prior art document relevant to the invention is patent document JP 2003 149074 A.

### SUMMARY

### TECHNICAL PROBLEM

Trays, which are top-sealed packages, have differences for example in the materials of tray bodies depending on the tray, and when a soft raw material is used, if the pressing force is too strong there is the risk that it might end up damaging the tray and/or the product inside the tray.

It is a problem of the present invention to provide a seal checking apparatus and a packaging and inspection system that can inhibit pressure on trays from becoming too large.

### SOLUTION TO PROBLEM

A seal checking apparatus of a first aspect is a seal checking apparatus that performs a seal check on a tray in which an opening defined by a rim has been sealed by a film. The seal checking apparatus includes a transport conveyor that transports the tray, a contact component, a raising/lowering unit, a detection unit, an inspection unit, and a control unit. The contact component is disposed above the transport conveyor. The contact component contacts the tray transported by the transport conveyor. The raising/lowering unit changes the height position of the contact component. The detection unit detects an amount of displacement in the height position of the contact component when the tray is touching the contact component. The inspection unit inspects the sealed state of the film by comparing a preset threshold with the amount of displacement detected by the detection unit. The control unit controls the raising/lowering unit. The control unit causes the contact component to stand by in a first height position. The first height position is higher than the height position of the rim of the tray. When the tray is transported thereto, the control unit changes the force that the raising/lowering unit applies to the contact component to thereby lower the contact component from the first height position toward a predetermined second height position. When the contact component touches the film of the tray, the control unit changes a first force to a second force to thereby cause pressure to be exerted from the contact component to the film of the tray. The first force is the force that the raising/lowering unit had been applying to the contact component before the contact component touched the film of the tray. The second force is a force different from the first force.

Here, the second force for the seal check is made different from the first force that had been applied before the contact component touched the film of the tray. For this reason, the size of the force that acts on the tray from the contact component when the contact component touches the film of the tray can be suppressed, and the pressure exerted on the tray is kept from becoming excessive.

A seal checking apparatus of a second aspect is the seal checking apparatus of the first aspect, wherein a downward force caused by gravity and an upward force caused by the raising/lowering unit act on the contact component. The first force and the second force are upward forces caused by the raising/lowering unit.

Here, a downward force caused by gravity corresponding to the mass of the contact component and an upward force caused by the raising/lowering unit act on the contact component. When the former downward force becomes larger than the latter upward force, the contact component descends, and when the former downward force becomes smaller than the latter upward force, the contact component ascends. After the contact component contacts the film of the tray in a state in which the former downward force is larger than the latter upward force, a downward force equal to the difference between the former downward force and the latter upward force acts on the tray.

A seal checking apparatus of a third aspect is the seal checking apparatus of the first aspect or the second aspect, wherein the control unit changes the second height position in accordance with the type of the tray.

If the second height position is far apart from the height position of the rim of the tray, there is the risk that a force greater than necessary may act on the tray during the seal check. However, here, because the second height position can be changed in accordance with the tray material and size, the force that acts on the tray during the seal check can be kept to an appropriate range.

A seal checking apparatus of a fourth aspect is the seal checking apparatus of any of the first aspect to the third aspect, wherein the control unit changes the second force in accordance with the type of the tray.

Depending on the type of the tray, if the second force for the seal check is too large, there is the risk that the tray may become deformed and/or damaged. However, here, because the second force can be changed in accordance with the material and size of the tray, the force that acts on the tray during the seal check can be kept to an appropriate range.

A seal checking apparatus of a fifth aspect is the seal checking apparatus of the second aspect, wherein the control unit changes the force that the raising/lowering unit applies to the contact component when it is lowering the contact component from the first height position. By this control, the control unit increases, in a predetermined height range before the contact component touches the film of the tray, the upward force caused by the raising/lowering unit that acts on the contact component.

Here, before the contact component touches the film of the tray, the upward force caused by the raising/lowering unit that acts on the contact component increases so that the difference between it and the downward force caused by gravity acting on the contact component becomes smaller. Because of this, the force that acts on the tray from the contact component when the contact component touches the film of the tray can be kept to an appropriate size. In other words, here, the apparent mass of the contact component when it contacts the film of the tray can be reduced to reduce shock when the contact component comes into contact with the tray.

A seal checking apparatus of a sixth aspect is the seal checking apparatus of any of the first aspect to the fifth aspect, wherein the contact component contacts a part of the film that does not coincide with the rim of the tray.

A seal checking apparatus of a seventh aspect is the seal checking apparatus of any of the first aspect to the sixth aspect, wherein the contact component is attachable to and detachable from the raising/lowering unit and is replaced in accordance with the type of the tray.

Here, no matter whether the tray is large or small in planar size, by replacing the contact component, an appropriate seal check can be performed thereon.

A packaging and inspection system of an eighth aspect includes the seal checking apparatus of the first aspect or the second aspect, a top sealing apparatus, a first transport unit, and a second transport unit. The top sealing apparatus seals the opening by adhering the film to the rim of the tray into which a product has been put. The first transport unit transports the tray in which the opening has been sealed by the top sealing apparatus. The second transport unit is disposed between the first transport unit and the seal checking apparatus. The second transport unit receives the tray from the first transport unit and transports the tray to the transport conveyor of the seal checking apparatus. The transport speed of the second transport unit is faster than the transport speed of the first transport unit.

In this packaging and inspection system, the first transport unit and the second transport unit are disposed between the top sealing apparatus and the seal checking apparatus, and the transport speed of the second transport unit is set faster than the transport speed of the first transport unit. Because of this, even in a case where the gaps in the transport direction between the plural trays continuously supplied from the top sealing apparatus to the first transport unit are small (the distance between the trays is tight), the gaps between the trays can be enlarged when the trays transfer from the first transport unit to the second transport unit.

### Advantageous Effects of Invention

In the seal checking apparatus and the packaging and inspection system pertaining to the present invention, the second force for the seal check is made different from the first force that had been applied before the contact component touched the film of the tray. For this reason, the size of the force that acts on the tray from the contact component when the contact component touches the film of the tray can be suppressed, and the pressure exerted on the tray is kept from becoming excessive.

### BRIEF DESCRIPTION OF THE DRAWINGS

FIG. 1 is a schematic layout drawing of a packaging and inspection system;
FIG. 2 is a schematic view of a tray that is an inspection target;
FIG. 3A is a side view of a seal checking apparatus;
FIG. 3B is an enlarged view of part of FIG. 3A;
FIG. 4 is a perspective view of main parts of the seal checking apparatus;
FIG. 5 is a perspective view of a support to which a contact member of the seal checking apparatus is attached;
FIG. 6 is a perspective view of a securing member to which the contact member of the seal checking apparatus is attached;
FIG. 7 is a perspective view of the support of the seal checking apparatus;
FIG. 8 is a perspective view of the securing member to which a different contact member of the seal checking apparatus is attached;
FIG. 9 is a perspective view of the support to which the different contact member of the seal checking apparatus is attached;
FIG. 10 is a control block diagram of the seal checking apparatus;
FIG. 11A is a seal check control flowchart;
FIG. 11B is a seal check control flowchart;
FIG. 11C is a seal check control flowchart;
FIG. 12 is a schematic diagram showing lowering of the contact member of the seal checking apparatus; and
FIG. 13 is a side view of a seal checking apparatus pertaining to an example modification in a state in which the support secured to an upper portion of a horizontal link has been changed to a different pressing conveyor.

### DETAILED DESCRIPTION

An embodiment of the present invention will be described below with reference to the drawings. It will be noted that the following embodiment is a specific example of the present invention and is not intended to limit the technical scope of the present invention.

### (1) Overview of Packaging and Inspection System

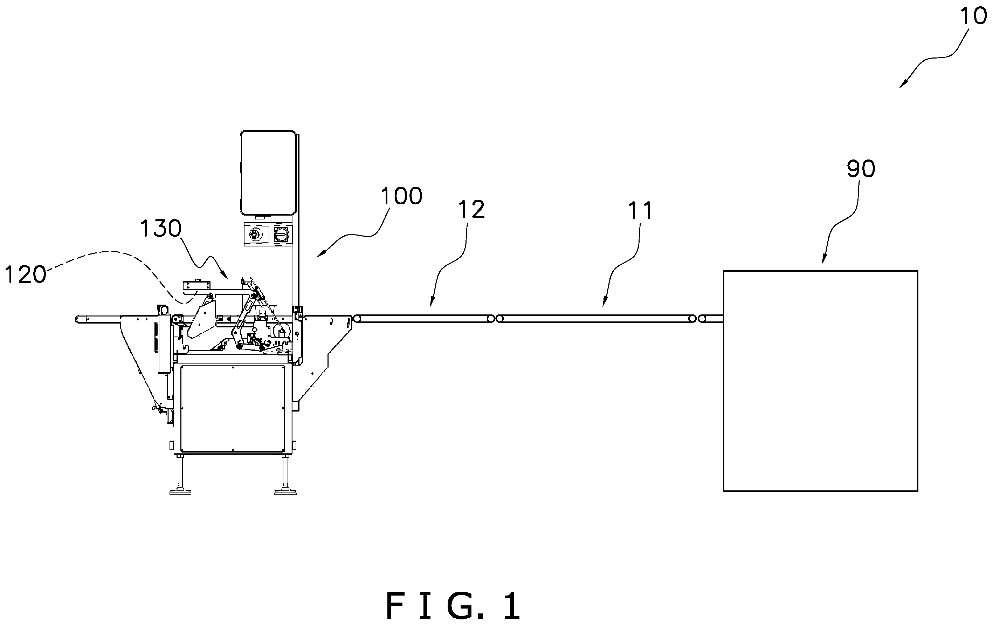

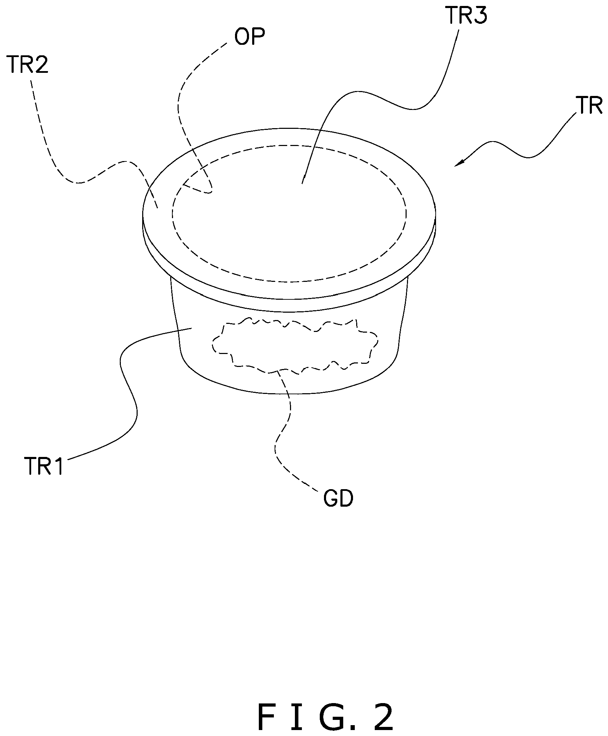

A packaging and inspection system 10 shown in FIG. 1 carries, by means of a first conveyor 11 and a second conveyor 12 to a seal checking apparatus 100, a tray TR discharged from a top sealing apparatus 90 and, in the seal checking apparatus 100, checks the sealed state of the tray TR. The tray TR, as shown in FIG. 2, has an opening OP in its upper portion that is sealed by a film TR3. The opening OP is defined by an annular rim TR2 on the upper end of the tray TR. The sealing by the film TR3 in the top sealing apparatus 90 is heat sealing performed with respect to the rim TR2 in a state in which a product GD (contents) has been put into a tray body TR1. In the top sealing apparatus 90, the heat sealing is performed on the part where the film TR3 and the rim TR2 coincide.

The top sealing apparatus 90 is a commonly known apparatus, so detailed description thereof will be omitted, but as with the apparatus of Patent Document 1 (JP-A No. 2006-160264) listed above, it covers with the film TR3, which comprises a watertight plastic for example, the opening OP defined by the rim TR2 of the upper portion of the tray body TR1, which is made of synthetic resin or paper, and heats and welds together (heat-seals) the film TR3 and the rim TR2. Examples of the product GD inside the tray TR that is contents include processed foods including liquid or moisture.

### (2) Transport of Tray from Top Sealing Apparatus to Seal Checking Apparatus

In the packaging and inspection system 10, the tray TR that has been top-sealed by the top sealing apparatus 90 is transported by the first conveyor 11 and the second conveyor 12 to the seal checking apparatus 100. As shown in FIG. 1, in the packaging and inspection system 10, the top sealing apparatus 90, the first conveyor 11, the second conveyor 12, and the seal checking apparatus 100 are arranged in series from upstream to downstream on a package inspection line.

The transport speed of the second conveyor 12 is set faster than the transport speed of the first conveyor 11. Because of this, even in a case where the gaps in the transport direction between the plural trays TR continuously supplied from the top sealing apparatus 90 to the first conveyor 11 are small (the distance between the trays TR is tight), the gaps between the trays TR become larger when the trays TR transfer from the first conveyor 11 to the second conveyor 12. Consequently, the plural trays TR are supplied to the seal checking apparatus 100 in a state in which certain gaps in the transport direction (the left-right direction in FIG. 1) are ensured.

### (3) Seal Checking Apparatus

The seal checking apparatus 100 is an apparatus that performs a seal check on the top-sealed tray TR. The seal checking apparatus 100 mainly includes a transport conveyor 110 that transports the tray TR, a contact member 120 that contacts the tray TR, a raising/lowering mechanism 130 that changes the height position of the contact member 120, a detection unit 140 that detects an amount of displacement in the height position of the contact member 120, an inspection unit 150 that inspects the sealed state of the tray TR, and a control unit 160 that controls the raising/lowering mechanism 130.

### (3-1) Transport Conveyor

The transport conveyor 110 is a conveyor group for feeding the tray TR into, transporting the tray TR in, and discharging the tray TR from the seal checking apparatus 100, and is configured by a third conveyor 113, a fourth conveyor 114, and a fifth conveyor 115. The third conveyor 113, the fourth conveyor 114, and the fifth conveyor 115 are sequentially arranged in series from the first conveyor 11 side.

### (3-2) Contact Member

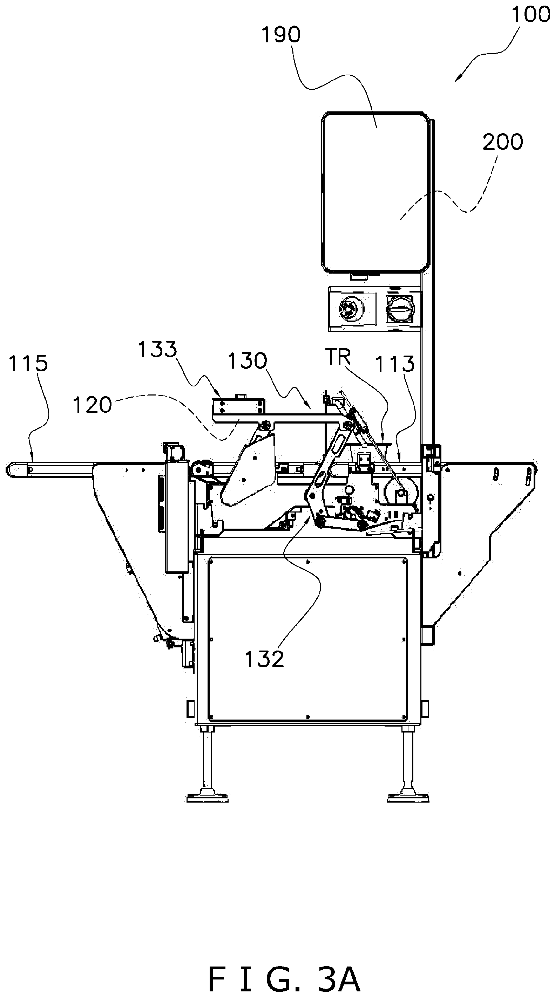

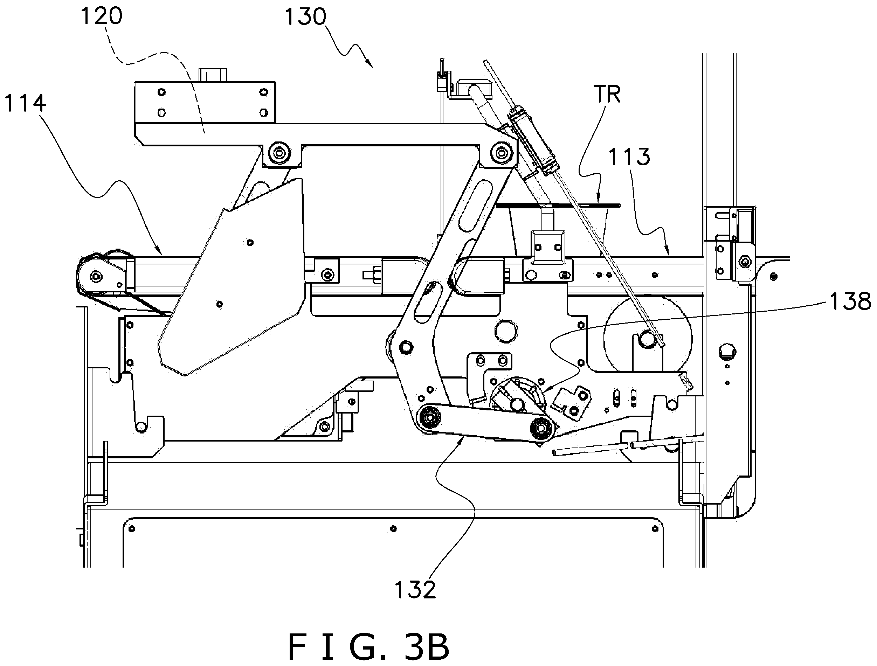

The contact member 120 is a member that contacts, and applies pressure from above to, the film TR3 of the tray TR during the seal check. The contact member 120 is, as shown in FIG. 3B, FIG. 4, and FIG. 12, disposed in the space above the transport conveyor 110, specifically above the fourth conveyor 114. The contact member 120 contacts from above the tray TR transported thereto by the fourth conveyor 114. The part of the tray TR that the contact member 120 contacts is the part of the film TR3 that does not coincide with the rim TR2 when viewed in a top view. Furthermore, the contact member 120 is made of resin or rubber.

### (3-3) Raising/Lowering Mechanism

The raising/lowering mechanism 130 is a mechanism for changing the height position of the contact member 120. The raising/lowering mechanism 130 mainly includes a support 133 to which the contact member 120 is secured, a securing member 121 that secures the contact member 120 to the support 133, a horizontal link 132 for changing the height position of the support 133 while maintaining its horizontal state, and a servo motor 138 that moves a lever in the lower portion of the horizontal link 132.

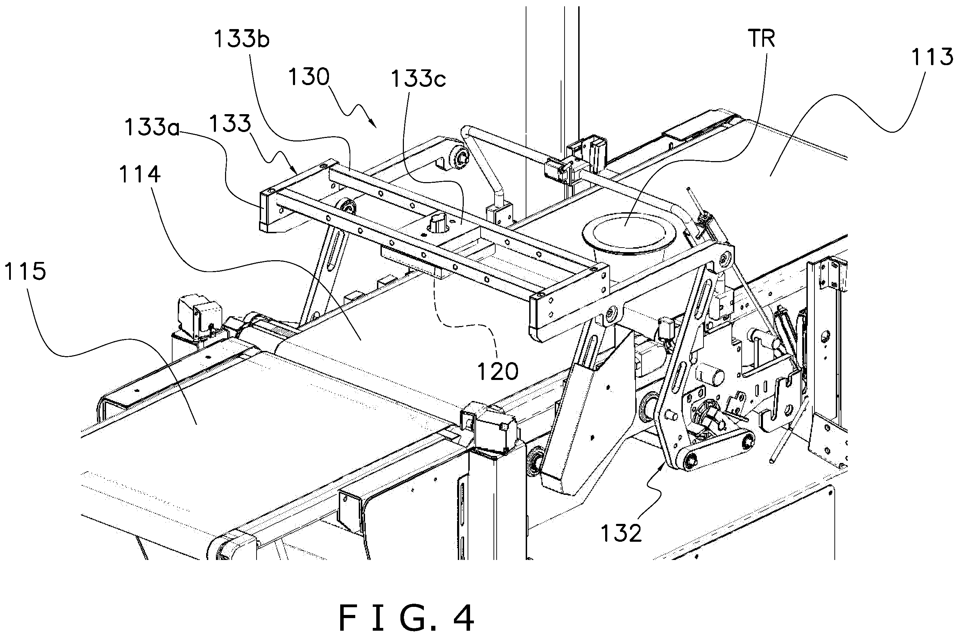

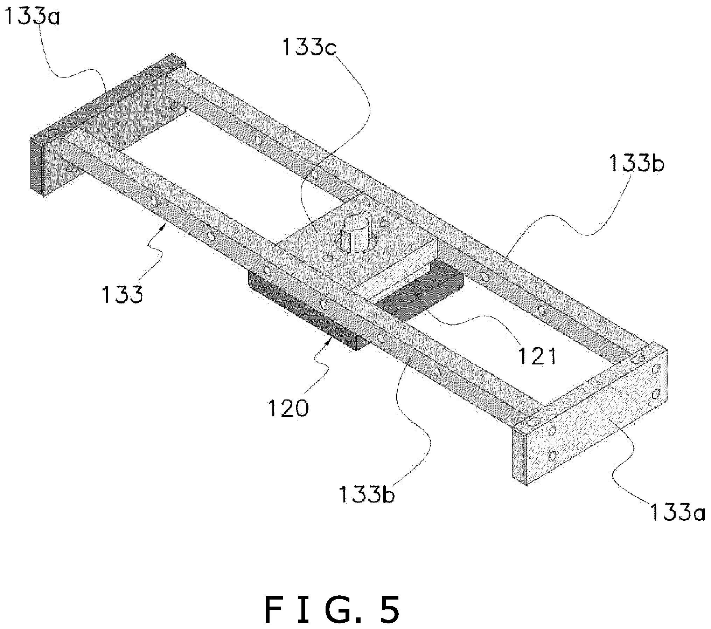

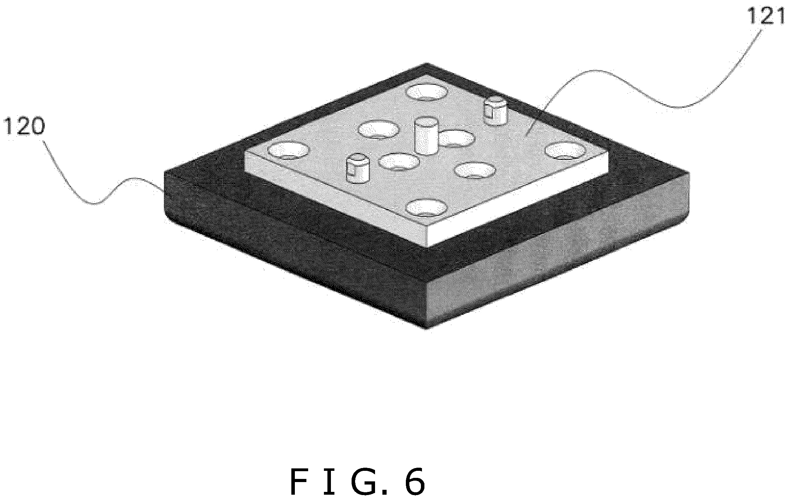

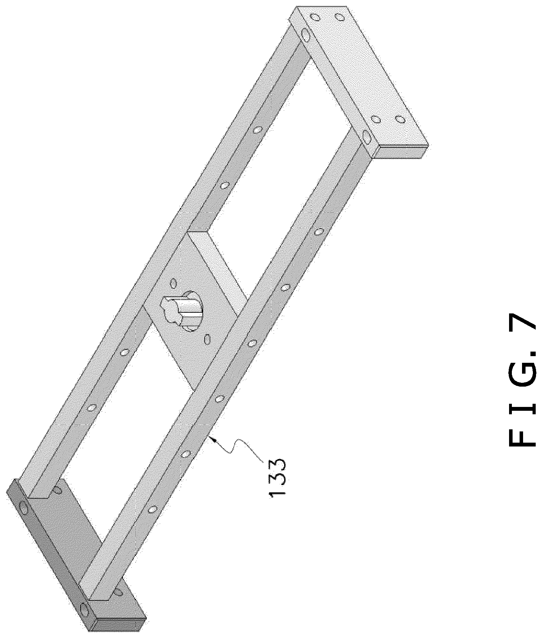

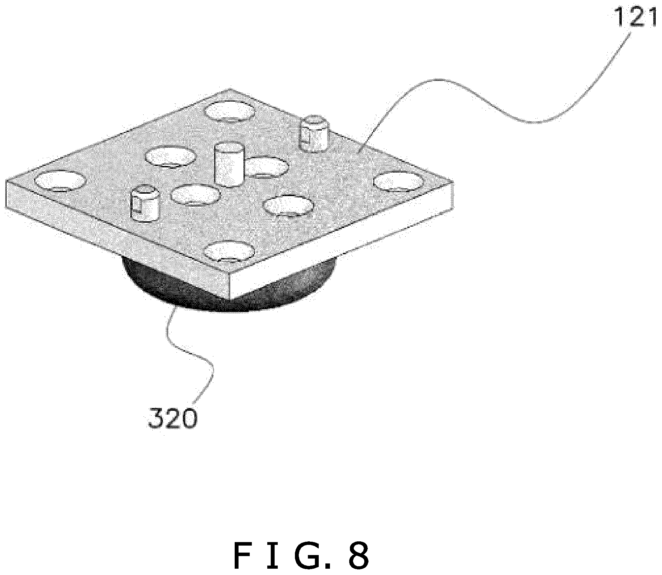

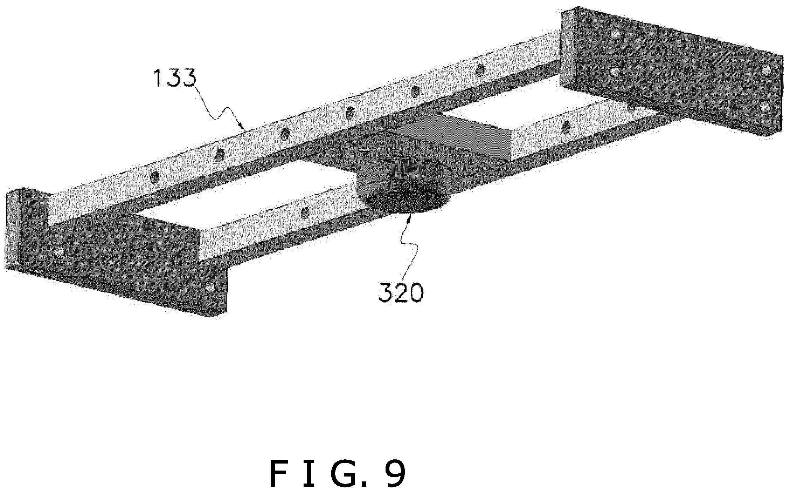

The support 133, as shown in FIG. 4, is secured to the upper portion of the horizontal link 132 and extends long in the direction orthogonal to the transport direction of the tray TR. The support 133 has two end portions 133a, 133a that are secured to the horizontal link 132, connecting portions 133b that interconnect the two end portions 133a, 133a, and a support portion 133c that is secured to the lengthwise direction center portions of the connecting portions 133b. The contact member 120 is secured via the securing member 121 to the support portion 133c. Although FIG. 5 shows a state in which the contact member 120 is secured to the support 133, the securing member 121 and the contact member 120 can be detached from the support 133. The securing member 121 and the contact member 120 detached from the support 133 are shown in FIG. 6. FIG. 7 shows the support 133 from which the securing member 121 and the contact member 120 have been detached. Additionally, instead of the contact member 120 shown in FIG. 6, a small contact member 320 shown in FIG. 8 for example can be attached to the securing member 121. When the securing member 121 having the contact member 320 of FIG. 8 attached to it is attached to the support portion 133c of the support 133, the contact member 320 becomes secured to the support 133 (see FIG. 9). In this way, both the contact member 120 and the contact member 320 can be attached to the support 133, and the selection thereof is made by the user in accordance with the type (size, etc.) of the tray TR.

### (3-4) Detection Unit

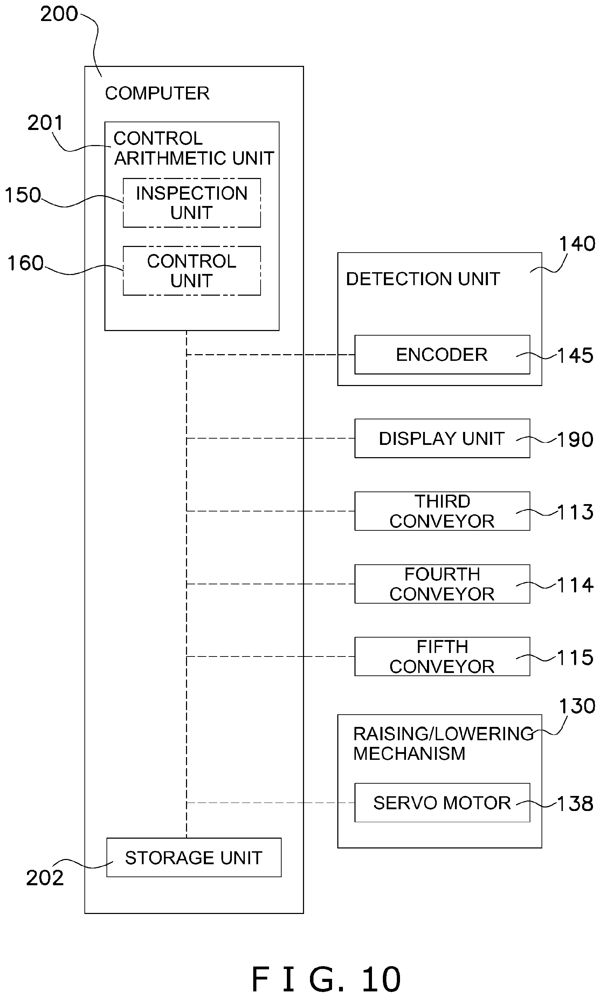

The detection unit 140 detects the amount of displacement in the height position of the contact member 120 when the tray TR is touching the contact member 120. As shown in FIG. 10, the detection unit 140 has an encoder 145, and the encoder 145 outputs the rotational amount of a rotating shaft of the servo motor 138. The output of the encoder 145 is read by a later-described computer 200 and handled as the amount of displacement in the height position of the contact member 120.

### (3-5) Inspection Unit and Control Unit

The inspection unit 150 and the control unit 160 are realized by the computer 200 and are functional units in a program executed by the computer 200 in the seal checking apparatus 100. The computer 200 includes a control arithmetic unit 201 and a storage unit 202 (see FIG. 10). For the control arithmetic unit 201, a processor such as a CPU or GPU can be used. The control arithmetic unit 201 reads programs stored in the storage unit 202 and performs predetermined image processing and arithmetic processing in accordance with the programs. Moreover, the control arithmetic unit 201 can, in accordance with the programs, write arithmetic results to the storage unit 202 and read information stored in the storage unit 202.

The inspection unit 150 inspects the sealed state of the film TR3 of the tray TR by comparing with a preset threshold the amount of displacement detected by the detection unit 140 (the amount of displacement in the height position of the contact member 120).

### (3-6) Seal Check Control Flow

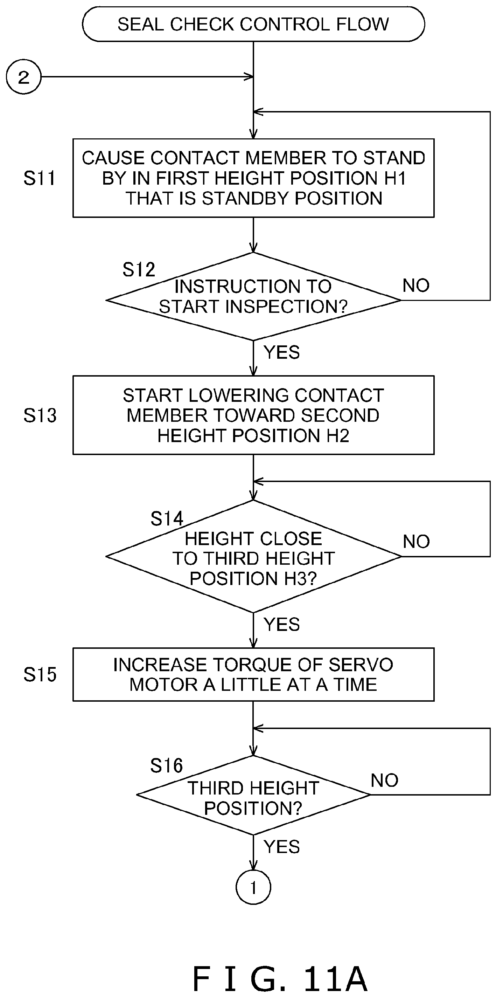

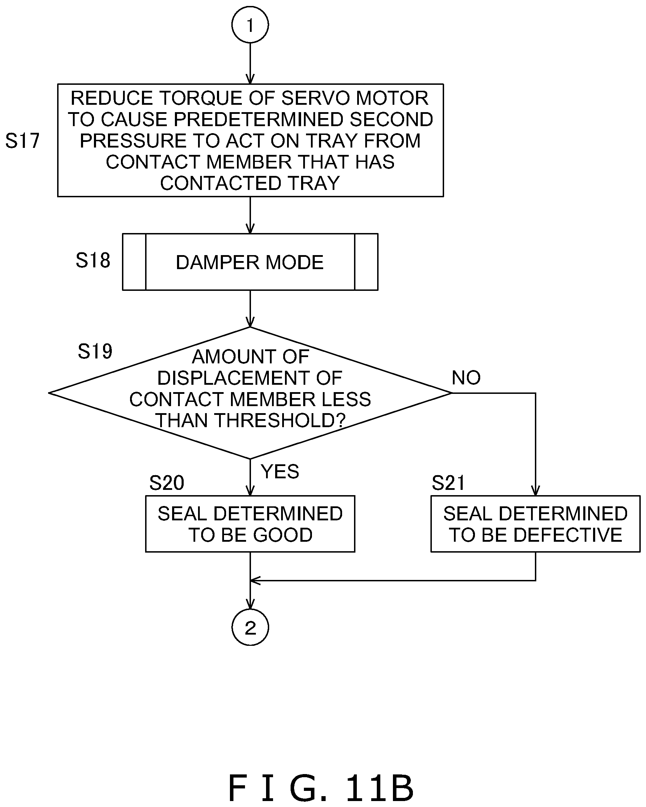

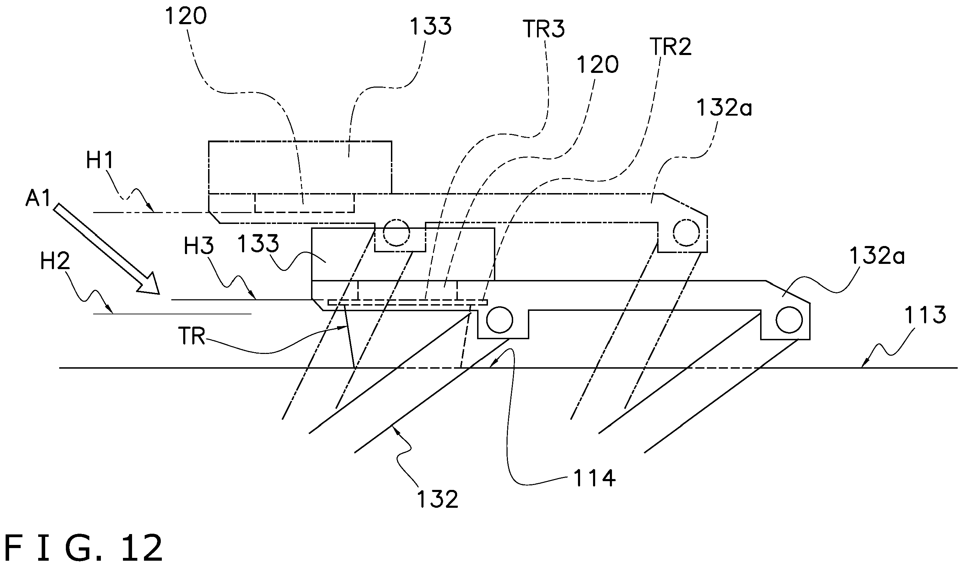

The control unit 160 controls the servo motor 138 of the raising/lowering mechanism 130 in accordance with the control flow shown in FIG. 11A to FIG. 11C. Prior to this seal check control, in the seal checking apparatus 100, after startup, the control unit 160 decides control parameters based on initial information relating to the tray TR which has been input by a user from a touch panel display unit 190 having an input function. Specifically, when the product number of the tray TR that is the inspection target is designated, the control arithmetic unit 201 reads from the storage unit 202 various types of applicable control parameters and sets operating conditions. The initially set operating conditions include, for example, the timing when lowering of the contact member 120 is to start after detection of the infeed of the tray TR based on the size of the tray TR, the material of the tray body TR1, and the material of the film TR3, a first height position H1 that is a standby position, a second height position H2, and a third height position H3 (see FIG. 12), a later-described second force, and the set value of the torque of the servo motor 138 in a damper mode.

When operation begins and the tray TR is fed in from the top sealing apparatus 90 via the first conveyor 11 and the second conveyor 12, the seal check on the tray TR in the seal checking apparatus 100 begins. When the tray TR that is the inspection target is on the third conveyor 113, the contact member 120 is stationary in the first height position H1 that is a standby position (step S11). The first height position H1 is, as shown in FIG. 12, higher than the height position of the rim TR2 of the tray TR.

When the tray TR is carried from the third conveyor 113 to the fourth conveyor 114, an instruction to start the inspection is generated and the control unit 160 sends an operation instruction to the servo motor 138 (step S12 and step S13). Near the boundary between the third conveyor 113 and the fourth conveyor 114 is disposed a sensor that detects the passage of the tray TR.

Upon receiving the instruction to start the inspection, the control unit 160 changes the force (torque) applied from the servo motor 138 to the contact member 120 to lower the contact member 120 from the first height position H1 toward the second height position H2. The second height position H2 is initially set to a position slightly lower than the height position of the rim TR2 of the tray TR (see FIG. 12). It will be noted that the third height position H3 shown in FIG. 12 is the height position of the rim TR2 of the tray TR.

A downward force caused by gravity proportional to, for example, the mass of the contact member 120 and an upward force caused by the servo motor 138 act on the contact member 120, and when the latter upward force becomes smaller than the former downward force, the contact member 120 descends. That is, the upward force, which cancels out gravity acting on, for example, the contact member 120, the horizontal link 132, and the support 133, acts from the servo motor 138 on the contact member 120 stationary in the first height position H1 that is a standby position. By weakening the force (torque) from the servo motor 138, the contact member 120 descends. Due to the action of the horizontal link 132, when the contact member 120 descends it moves in the direction indicated by outline arrow A1 in FIG. 12, that is, obliquely downward.

In step S14, the control unit 160 determines whether the contact member 120 has descended to a height position close to the third height position H3. As the height position close to the third height position H3, here, an intermediate height position between the first height position H1 and the third height position H3 is used, but it is not limited to this, and for example a height position that is closer than this to the third height position H3 may be used.

When the contact member 120 descends to the height position close to the third height position H3, the torque of the servo motor 138 is increased a little at a time to slow the descent speed of the contact member 120 in order to mitigate shock when the contact member 120 contacts the tray TR (step S15).

In step S16, the control unit 160 determines whether the contact member 120 has descended to the third height position H3, that is, whether the contact member 120 has descended to a height position at which it touches the film TR3 of the tray TR. The control unit 160 calculates the height position of the contact member 120 based on the output from the encoder 145 of the detection unit 140.

When the control unit 160 determines that the contact member 120 has descended to the third height position H3, it reduces the torque that the servo motor 138 had been outputting just before the contact member 120 contacted the tray TR to thereby increase the downward pressure exerted by the contact member 120 on the tray TR (see step S17). In other words, after the contact member 120 has descended to the third height position H3 and contacted the tray TR, the control unit 160 changes the upward force that the servo motor 138 had been causing to act on the contact member 120 from a first force to a second force (a force smaller than the first force). Because of this, the downward pressure exerted by the contact member 120 on the film TR3 of the tray TR becomes a value suitable for the seal check. For the seal check, a certain large applied pressure is needed.

It will be noted that due to minute deformation of the tray TR, the contact member 120 goes down slightly beyond the third height position H3 and descends to a height position between the third height position H3 and the second height position H2. However, the contact member 120 does not end up going down to the second height position H2. The second height position H2 is initially set in that way in accordance with the size and type of the tray TR.

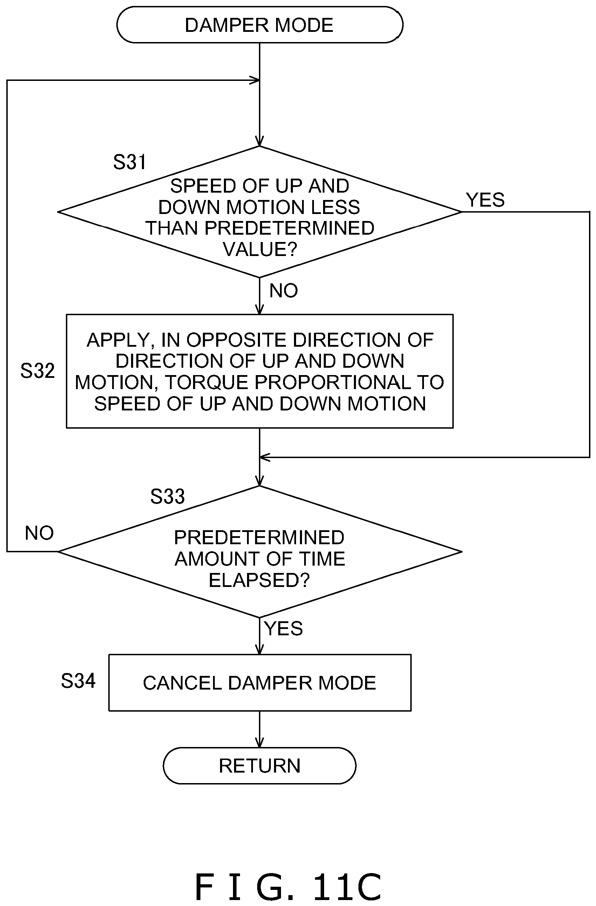

After step S17, the control unit 160 executes a damper mode (step S18; steps S31 to S33). The details of the damper mode are shown in FIG. 11C. When the contact member 120 vibrates, that is, moves up and down due to shock when it contacts the tray TR, the rotating shaft of the servo motor 138 rotates at a rotational speed corresponding to the speed of the up and down motion via the horizontal link 132. Thus, the control unit 160 determines whether the speed of the up and down motion of the contact member 120 is less than a predetermined value (step S31).

In a case where it is determined in step S31 that the speed of the up and down motion (the absolute value of the speed of the up and down motion) of the contact member 120 is equal to or greater than the predetermined value, this means that the up and down motion is none other than a large vibration caused by the shock. In light of this, in step S32, the control unit 160 outputs a control signal to the servo motor 138 which is placed in a torque control mode so as to apply, in the opposite direction of the direction of the speed of the up and down motion, a torque proportional to the speed of the up and down motion. Because of this, the vibration of the contact member 120 caused by the contact between the tray TR and the contact member 120 becomes suppressed.

In step S33, it is determined whether a predetermined amount of time needed for the seal check has elapsed. When the predetermined amount of time elapses, the damper mode is canceled (step S34), and in step S19 the inspection unit 150 determines whether the amount of displacement of the contact member 120 is less than a threshold. When the inspection unit 150 determines that the amount of displacement of the contact member 120 is less than the threshold, in step S20 the inspection unit 150 decides that the sealed state of the tray TR is good. When the inspection unit 150 determines that the amount of displacement of the contact member 120 is equal to or greater than the threshold, in step S21 the inspection unit 150 decides that the sealed state of the tray TR is defective.

### (4) Characteristics

(4-1)
In the seal checking apparatus 100 of the present embodiment, the second force for the seal check is made different from the first force that had been applied before the contact member 120 touched the film TR3 of the tray TR. Because of this, the size of the force that acts on the tray TR from the contact member 120 when the contact member 120 touches the film TR3 of the tray TR can be suppressed, and the downward pressure exerted by the contact member 120 on the tray TR is kept from becoming excessive.

(4-2)
In the seal checking apparatus 100 of the present embodiment, a downward force caused by gravity corresponding to, for example, the masses of the contact member 120 and the horizontal link 132 and an upward force caused by the servo motor 138 of the raising/lowering mechanism 130 act on the contact member 120. When the former downward force becomes larger than the latter upward force, the contact member 120 descends, and when the former downward force becomes smaller than the latter upward force, the contact member 120 ascends. After the contact member 120 contacts the film TR3 of the tray TR in a state in which the former downward force is larger than the latter upward force, a downward force equal to the difference between the former downward force and the latter upward force acts in the form of pressure on the film TR3 of the tray TR.

(4-3)
In the seal checking apparatus 100 of the present embodiment, the control unit 160 changes the second height position H2 in accordance with the type of the tray TR. Specifically, based on the product number of the tray TR that is the inspection target which has been input by the user, the size of the tray TR, the material of the tray body TR1, and the material of the film TR3 are read from the storage unit 202, and the second height position H2 that accords with those is selected by the control unit 160.

If the second height position H2 is far apart from the height position of the rim TR2 of the tray TR (the third height position H3), there is the risk that a force greater than necessary may act on the tray TR during the seal check. However, here, because the second height position TR is changed in accordance with the material and size of the tray TR, the force that acts on the tray TR during the seal check can be kept to an appropriate range.

(4-4)
In the seal checking apparatus 100 of the present embodiment, the control unit 160 changes the second force, that is, the upward force made to act from the servo motor 138 on the contact member 120 after the contact member 120 has contacted the tray TR, in accordance with the type of the tray TR. Specifically, based on the product number of the tray TR that is the inspection target which has been input by the user, the size of the tray TR, the material of the tray body TR1, and the material of the film TR3 are read from the storage unit 202, and the second force that accords with those is selected by the control unit 160.

Depending on the type of the tray TR, if the second force for the seal check is too large, there is the risk that the tray TR may become deformed and/or damaged. For example, the rigidity of the tray body TR1 may differ greatly between a case where the material of the tray body TR1 is plastic and a case where it is paper. However, here, because the control unit 160 changes the second force in accordance with the material and size of the tray TR, the force that acts on the tray TR during the seal check can be kept to an appropriate range.

(4-5)
In the seal checking apparatus 100 of the present embodiment, before the contact member 120 touches the film TR3 of the tray TR, the upward force caused by the servo motor 138 of the raising/lowering mechanism 130 that acts on the contact member 120 increases, so that the difference between it and the downward force caused by gravity acting on the contact member 120, the horizontal link 132, and the support 133 becomes smaller. Because of this, the force that acts on the tray TR from the contact member 120 when the contact member 120 touches the film TR3 of the tray TR can be kept to an appropriate size. In other words, here, the apparent mass of the contact member 120 when it contacts the film TR3 of the tray TR can be reduced to reduce shock when the contact member 120 comes into contact with the tray TR.

(4-6)
In the seal checking apparatus 100 of the present embodiment, by replacing the contact member 120 shown in FIG. 6 with the small contact member 320 shown in FIG. 8, an appropriate seal check can be performed even when the size and shape of the tray TR change. It will be noted that by preparing beforehand contact members of other sizes and shapes in addition to these contact members 120, 320, the seal checking apparatus can also accommodate more types of trays.

(4-7)
In the packaging and inspection system 10 of the present embodiment, the transport speed of the second conveyor 12 is set faster than the transport speed of the first conveyor 11. Because of this, as mentioned above, even in a case where the gaps in the transport direction between the plural trays TR continuously supplied from the top sealing apparatus 90 to the first conveyor 11 are small, the gaps between the trays TR become larger when the trays TR transfer from the first conveyor 11 to the second conveyor 12. Additionally, the plural trays TR are supplied to the seal checking apparatus 100 in a state in which certain gaps in the transport direction are ensured.

It will be noted that the fourth conveyor 114 of the seal checking apparatus 100 is intermittently driven, so that during the seal checks the fourth conveyor 114 is stopped.

### (5) Example Modifications

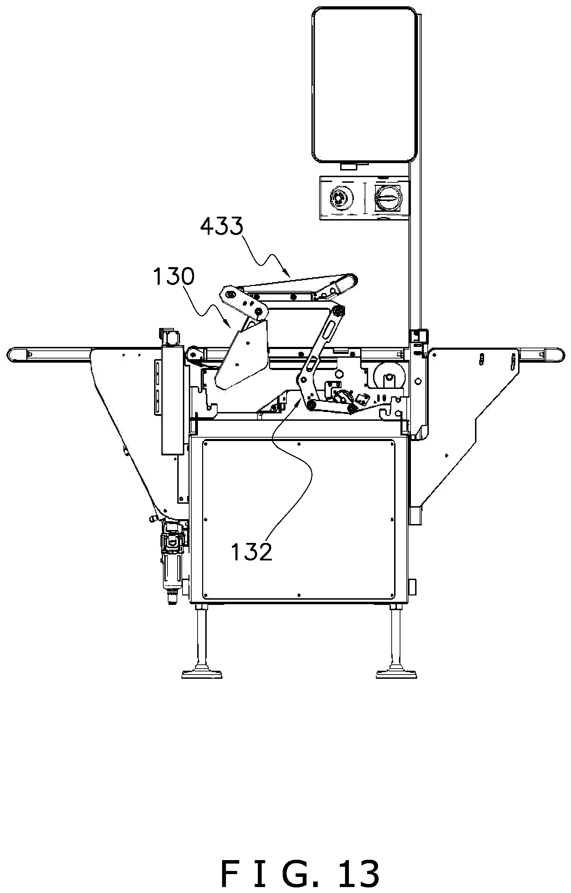

(5-1)
In the above embodiment, the seal checking apparatus 100 that used the top-sealed tray TR as an inspection target was described, but by detaching the support 133 and the contact member 120 that are secured to the horizontal link 132 and attaching to the horizontal link 132 a pressing conveyor 433 for inspecting other packages, it becomes possible to change the inspection target of the seal checking apparatus 100 to other packages (see FIG. 13). The pressing conveyor 433 shown in FIG. 13 is, for example, a structure such as the "upper conveyor 61" described in JP-A No. 2013-035590. By attaching such a pressing conveyor 433 to the horizontal link 132, bag-like packages obtained by heat-sealing tops and bottoms of a tubular packaging material can, rather than the top-sealed trays TR, be used as the inspection target.

(5-2)
In the above embodiment, the control unit 160 calculates the height position of the contact member 120 based on the output from the encoder 145 of the detection unit 140 and, based on that height position, determines in step S16 of FIG. 11A whether the contact member 120 has descended to the third height position H3, that is, whether the contact member 120 has descended to a height position at which it touches the film TR3 of the tray TR. Then, using the fact that the contact member 120 has descended to the third height position H3 as a trigger, the control unit 160 reduces the torque of the servo motor 138 in step S17 to increase the downward pressure exerted by the contact member 120 on the tray TR. That is, the control unit 160 judges, based on the height position of the contact member 120, to switch from the first force that had been applied before the contact member 120 touched the film TR3 of the tray TR to the second force for the seal check.

Instead of this kind of switch control, the condition for switching from the first force to the second force may also be the amount of time since the contact member 120 started to be lowered from the first height position H1. For example, when the amount of time that has elapsed since the contact member 120 started to be lowered reaches a preset torque switching time, the control unit 160 may reduce the torque of the servo motor 138 to switch from the first force to the second force. In the case of employing this control, the third height position H3 corresponding to the height of the tray TR becomes a rough height, and the preset torque switching time becomes the criterion for judging whether the contact member 120 has contacted the tray TR. In a case where the height position of the rim TR2 of the tray TR and the height position of the highest part of the film TR3 of the tray TR are different, for example in a case where the product GD inside the tray TR is pushing up the central part of the film TR3 of the tray TR, it is preferred to use the torque switching time to judge the contact between the contact member 120 and the tray TR.

Furthermore, instead of the switching control in the above embodiment, the condition for switching from the first force to the second force may be a condition that uses changes in the torque of the servo motor 138. A sudden change in torque occurs in the servo motor 138 when the descended contact member 120 contacts the tray TR, so to detect this the control unit 160 monitors, for example, the current value of the servo motor 138. Then, after the control unit 160 detects the change in the torque of the servo motor 138 caused by the contact member 120 having contacted the tray TR, the control unit 160 reduces the torque of the servo motor 138 to switch from the first force to the second force, so that the switch from the first force to the second force no longer reliably occurs until the contact member 120 contacts the tray TR, and excessive pressure does not act on the tray TR at the moment when the contact member 120 contacts the tray TR.

### REFERENCE SIGNS LIST

- 10: Packaging and Inspection System
- 11: First Conveyor
- 12: Second Conveyor
- 90: Top Sealing Apparatus
- 100: Seal Checking Apparatus
- 110: Transport Conveyor
- 113: Third Conveyor
- 114: Fourth Conveyor
- 115: Fifth Conveyor
- 120: Contact Member (Contact Component)
- 130: Raising/Lowering Mechanism (Raising/Lowering Unit)
- 138: Servo Motor
- 140: Detection Unit
- 150: Inspection Unit
- 160: Control Unit

### CITATION LIST

### Patent Literature

Patent Document 1: JP-A No. 2006-160264

## Claims

1. A seal checking apparatus (100) that performs a seal check on a tray in which an opening defined by a rim has been sealed by a film, the seal checking apparatus (100) comprising:
a transport conveyor (110) that transports the tray;
a contact component (120) that is disposed above the transport conveyor (110) and contacts the tray transported by the transport conveyor (110);
a raising/lowering unit (130) that changes the height position of the contact component;
a detection unit (140) that detects an amount of displacement in the height position of the contact component (120) when the tray is touching the contact component (120);
an inspection unit (150) that inspects the sealed state of the film by comparing a preset threshold with the amount of displacement detected by the detection unit (140); and
a control unit (160) that controls the raising/lowering unit (130),
wherein the control unit (160)
causes the contact component (120) to stand by in a first height position higher than the height of the rim of the tray,
**characterised in that**, when the tray is transported thereto, the control unit (160) changes the force that the raising/lowering unit (130) applies to the contact component (120) to thereby lower the contact component (120) from the first height position toward a predetermined second height position,
and, when the contact component (120) touches the film of the tray, changes a first force that the raising/lowering unit (130) had been applying to the contact component (120) before the contact component (120) touched the film of the tray to a second force different from the first force to thereby cause pressure to be exerted from the contact component (120) to the film of the tray.

2. The seal checking apparatus (100) of claim 1, wherein
a downward force caused by gravity and an upward force caused by the raising/lowering unit (130) act on the contact component (120), and
the first force and the second force are upward forces caused by the raising/lowering unit (130).

3. The seal checking apparatus (100) of claim 1 or 2, wherein the control unit (160) changes the second height position in accordance with the type of the tray.

4. The seal checking apparatus (100) of any one of claims 1 to 3, wherein the control unit (160) changes the second force in accordance with the type of the tray.

5. The seal checking apparatus (100) of claim 2, wherein the control unit (160) changes the force that the raising/lowering unit (130) applies to the contact component (120) when it is lowering the contact component (120) from the first height position to thereby increase, in a predetermined height range before the contact component (120) touches the film of the tray, the upward force caused by the raising/lowering unit (130) that acts on the contact component (120).

6. The seal checking apparatus (100) of any one of claims 1 to 5, wherein the contact component (120) contacts a part of the film that does not coincide with the rim of the tray.

7. The seal checking apparatus (100) of any one of claims 1 to 6, wherein the contact component (120) is attachable to and detachable from the raising/lowering unit (130) and is replaced in accordance with the type of the tray.

8. A packaging and inspection system (10) comprising:
the seal checking apparatus (100) of claim 1 or 2;
a top sealing apparatus (90) that seals the opening by adhering the film to the rim of the tray into which a product has been put;
a first transport unit (11) that transports the tray in which the opening has been sealed by the top sealing apparatus (90); and
a second transport unit (12) that is disposed between the first transport unit (11) and the seal checking apparatus (100), receives the tray from the first transport unit (11), and transports the tray to the transport conveyor (110) of the seal checking apparatus (100),
wherein the transport speed of the second transport unit (12) is faster than the transport speed of the first transport unit (11).

## Patentansprüche

1. Siegelprüfvorrichtung (100), die eine Siegelprüfung an einer Schale durchführt, in der eine durch einen Rand definierte Öffnung durch eine Folie versiegelt worden ist, wobei die Siegelprüfvorrichtung (100) umfasst:
einen Transportförderer (110), der die Schale transportiert;
eine Kontaktkomponente (120), die über dem Transportförderer (110) angeordnet ist und die durch den Transportförderer (110) transportierte Schale berührt;
eine Hebe-/Senkeinheit (130), die die Höhenposition der Kontaktkomponente ändert;
eine Detektionseinheit (140), die einen Verlagerungsbetrag in der Höhenposition der Kontaktkomponente (120) detektiert, wenn die Schale die Kontaktkomponente (120) berührt;
eine Inspektionseinheit (150), die den versiegelten Zustand der Folie durch Vergleichen eines voreingestellten Schwellenwerts mit dem durch die Detektionseinheit (140) detektierten Verlagerungsbetrag inspiziert; und
eine Steuereinheit (160), die die Hebe-/Senkeinheit (130) steuert,
wobei die Steuereinheit (160)
bewirkt, dass die Kontaktkomponente (120) in einer ersten Höhenposition in Bereitschaft ist, die höher als die Höhe des Randes der Schale ist,
**dadurch gekennzeichnet, dass**, wenn die Schale dorthin transportiert wird, die Steuereinheit (160) die Kraft ändert, die die Hebe-/Senkeinheit (130) auf die Kontaktkomponente (120) ausübt, um dadurch die Kontaktkomponente (120) von der ersten Höhenposition in Richtung einer vorbestimmten zweiten Höhenposition abzusenken,
und, wenn die Kontaktkomponente (120) die Folie der Schale berührt, eine erste Kraft, die die Hebe-/Senkeinheit (130) auf die Kontaktkomponente (120) ausgeübt hatte, bevor die Kontaktkomponente (120) die Folie der Schale berührte, in eine zweite Kraft ändert, die von der ersten Kraft verschieden ist, um dadurch zu bewirken, dass von der Kontaktkomponente (120) ein Druck auf die Folie der Schale ausgeübt wird.

2. Siegelprüfvorrichtung (100) nach Anspruch 1, wobei
eine durch Schwerkraft bewirkte abwärts gerichtete Kraft und eine durch die Hebe-/Senkeinheit (130) bewirkte aufwärts gerichtete Kraft auf die Kontaktkomponente (120) wirken, und
die erste Kraft und die zweite Kraft aufwärts gerichtete Kräfte sind, die durch die Hebe-/Senkeinheit (130) bewirkt werden.

3. Siegelprüfvorrichtung (100) nach Anspruch 1 oder 2, wobei die Steuereinheit (160) die zweite Höhenposition in Übereinstimmung mit dem Typ der Schale ändert.

4. Siegelprüfvorrichtung (100) nach einem der Ansprüche 1 bis 3, wobei die Steuereinheit (160) die zweite Kraft in Übereinstimmung mit dem Typ der Schale ändert.

5. Siegelprüfvorrichtung (100) nach Anspruch 2, wobei die Steuereinheit (160) die Kraft, die die Hebe-/Senkeinheit (130) auf die Kontaktkomponente (120) ausübt, wenn sie die Kontaktkomponente (120) von der ersten Höhenposition absenkt, ändert, um dadurch, in einem vorbestimmten Höhenbereich bevor die Kontaktkomponente (120) die Folie der Schale berührt, die durch die Hebe-/Senkeinheit (130) bewirkte aufwärts gerichtete Kraft zu erhöhen, die auf die Kontaktkomponente (120) wirkt.

6. Siegelprüfvorrichtung (100) nach einem der Ansprüche 1 bis 5, wobei die Kontaktkomponente (120) einen Teil der Folie berührt, der nicht mit dem Rand der Schale zusammenfällt.

7. Siegelprüfvorrichtung (100) nach einem der Ansprüche 1 bis 6, wobei die Kontaktkomponente (120) an der Hebe-/Senkeinheit (130) anbringbar und von dieser abnehmbar ist und in Übereinstimmung mit dem Typ der Schale ausgetauscht wird.

8. Verpackungs- und Inspektionssystem (10), umfassend:
die Siegelprüfvorrichtung (100) nach Anspruch 1 oder 2;
eine Obersiegelvorrichtung (90), die die Öffnung durch Anhaften der Folie an den Rand der Schale, in die ein Produkt gegeben worden ist, versiegelt;
eine erste Transporteinheit (11), die die Schale transportiert, in der die Öffnung durch die Obersiegelvorrichtung (90) versiegelt worden ist; und
eine zweite Transporteinheit (12), die zwischen der ersten Transporteinheit (11) und der Siegelprüfvorrichtung (100) angeordnet ist, die Schale von der ersten Transporteinheit (11) aufnimmt und die Schale zu dem Transportförderer (110) der Siegelprüfvorrichtung (100) transportiert,
wobei die Transportgeschwindigkeit der zweiten Transporteinheit (12) schneller als die Transportgeschwindigkeit der ersten Transporteinheit (11) ist.

## Revendications

1. Appareil de vérification de joint d'étanchéité (100) qui effectue une vérification de joint d'étanchéité sur un plateau dans lequel une ouverture définie par un rebord a été scellée par un film, l'appareil de vérification de joint d'étanchéité (100) comprenant :
un convoyeur de transport (110) qui transporte le plateau ;
un composant de contact (120) qui est disposé au-dessus du convoyeur de transport (110) et vient en contact avec le plateau transporté par le convoyeur de transport (110) ;
une unité de levage/abaissement (130) qui change la position en hauteur du composant de contact ;
une unité de détection (140) qui détecte une valeur de déplacement dans la position en hauteur du composant de contact (120) lorsque le plateau touche le composant de contact (120) ;
une unité d'inspection (150) qui inspecte l'état scellé du film en comparant un seuil prédéfini avec la valeur de déplacement détectée par l'unité de détection (140) ; et
une unité de commande (160) qui commande l'unité de levage/abaissement (130),
dans lequel l'unité de commande (160) amène le composant de contact (120) à se tenir prêt dans une première position en hauteur plus haute que la hauteur du rebord du plateau,
**caractérisé en ce que**, lorsque le plateau est transporté vers ce dernier, l'unité de commande (160) change la force que l'unité de levage/abaissement (130) applique au composant de contact (120) pour ainsi abaisser le composant de contact (120) de la première position en hauteur vers une deuxième position en hauteur prédéterminée,
et, lorsque le composant de contact (120) touche le film du plateau, change une première force que l'unité de levage/abaissement (130) était en train d'appliquer au composant de contact (120) avant que le composant de contact (120) ne touche le film du plateau en une deuxième force différente de la première force pour ainsi amener une pression à être exercée du composant de contact (120) vers le film du plateau.

2. Appareil de vérification de joint d'étanchéité (100) selon la revendication 1, dans lequel
une force orientée vers le bas créée par la gravité et une force orientée vers le haut créée par l'unité de levage/abaissement (130) agissent sur le composant de contact (120), et
la première force et la deuxième force sont des forces orientées vers le haut créées par l'unité de levage/abaissement (130).

3. Appareil de vérification de joint d'étanchéité (100) selon la revendication 1 ou 2, dans lequel l'unité de commande (160) change la deuxième position en hauteur selon le type du plateau.

4. Appareil de vérification de joint d'étanchéité (100) selon l'une quelconque des revendications 1 à 3, dans lequel l'unité de commande (160) modifie la deuxième force selon le type du plateau.

5. Appareil de vérification de joint d'étanchéité (100) selon la revendication 2, dans lequel l'unité de commande (160) modifie la force que l'unité de levage/abaissement (130) applique au composant de contact (120) lorsqu'elle abaisse le composant de contact (120) de la première position en hauteur pour ainsi augmenter, dans une plage de hauteur prédéterminée avant que le composant de contact (120) ne touche le film du plateau, la force orientée vers le haut créée par l'unité de levage/abaissement (130) qui agit sur le composant de contact (120).

6. Appareil de vérification de joint d'étanchéité (100) selon l'une quelconque des revendications 1 à 5, dans lequel le composant de contact (120) vient en contact avec une partie du film qui ne coïncide pas avec le rebord du plateau.

7. Appareil de vérification de joint d'étanchéité (100) selon l'une quelconque des revendications 1 à 6, dans lequel le composant de contact (120) peut être attaché à l'unité de levage/abaissement (130) et détaché de celle-ci et est placé à nouveau selon le type du plateau.

8. Système d'emballage et d'inspection (10) comprenant :
l'appareil de vérification de joint d'étanchéité (100) selon la revendication 1 ou 2 ;
un appareil de scellage supérieur (90) qui scelle l'ouverture par adhésion du film au rebord du plateau dans lequel un produit a été mis ;
une première unité de transport (11) qui transporte le plateau dans lequel l'ouverture a été scellée par l'appareil de scellage supérieur (90) ; et
une deuxième unité de transport (12) qui est disposée entre la première unité de transport (11) et l'appareil de vérification de joint d'étanchéité (100), reçoit le plateau à partir de la première unité de transport (11), et transporte le plateau jusqu'au convoyeur de transport (110) de l'appareil de vérification de joint d'étanchéité (100),
dans lequel la vitesse de transport de la deuxième unité de transport (12) est plus rapide que la vitesse de transport de la première unité de transport (11).
